# FASCICULE DE BREVET EUROPEEN

(11) **EP 3 347 224 B1**
(45) Date de publication et mention de la délivrance du brevet: **18.12.2019**
(21) Numéro de dépôt: 16775767.3
(22) Date de dépôt: 02.09.2016
(51) Int. Cl.: B60K 11/08

(54) **VOLETS D'ENTREE D'AIR AFFLEURANTS**
BÜNDIG EINGEBAUTE LUFTEINLASSKLAPPEN
FLUSH-MOUNTED AIR INLET FLAPS

(30) Priorité: 07.09.2015 FR 1558288
(43) Date de publication de la demande: 18.07.2018
(73) Titulaire: Compagnie Plastic Omnium, 69007 Lyon (FR)
(72) Inventeur: ANDRE, Gérald, 01500 Amberieu En Bugey (FR)
(74) Mandataire: LLR
(86) Numéro de dépôt international: PCT/FR2016/052177
(87) Numéro de publication internationale: WO 2017/042457

(56) Documents cités:
- EP-A1- 2 457 761
- DE-A1- 19 652 397
- FR-A1- 2 825 326

## Description

L'invention s'intéresse au dispositif d'entrée d'air d'un véhicule automobile. Ce dispositif a essentiellement pour objet de diriger de l'air ambiant provenant de l'extérieur du véhicule vers le dispositif de refroidissement du moteur afin de favoriser les échanges thermiques.

De manière commune, lorsque le moteur est disposé à l'avant du véhicule, une buse de guidage équipée (ou non) de lames est disposée en arrière de la calandre, et permet de concentrer une partie de l'air entrant vers la face avant du radiateur.

Les dispositifs les plus perfectionnés comprennent dorénavant des lames, ou encore des volets mobiles permettant de réguler l'arrivée d'air en fonction du régime thermique optimal du moteur, des conditions de roulage et de la température extérieure.

Ces dispositifs, et les mécanismes qui les animent, sont situés derrière la calandre, ou derrière toute autre entrée d'air située sur le véhicule, ce qui est le cas par exemple lorsque le moteur est situé à l'arrière du véhicule, et que l'on considère les entrées d'air situées latéralement sur chacune des ailes arrières. Les volets sont alors interposés entre le radiateur et les barreaux ou la grille formant la calandre et qui sont visibles depuis l'extérieur du véhicule.

On observe toutefois que, même lorsque les volets sont en position fermée, ces entrées d'air génèrent des pertes aérodynamiques résiduelles non négligeables en raison de la présence en face avant de la carrosserie des barreaux ou de la grille qui sont en saillie par rapport au plan formé par les volets.

Aussi, dans le but de s'affranchir de ces inconvénients aérodynamiques, il a été proposé de disposer ces volets directement en face avant du véhicule, et donc de les rendre visibles de l'extérieur.

Les volets mobiles d'entrée d'air participent donc au style et à l'aspect général extérieur du véhicule et doivent s'intégrer désormais le plus harmonieusement possible dans le profil général de la carrosserie et être en « continuité générale de forme » avec les pièces de la carrosserie entourant ladite entrée d'air.

Cette préoccupation s'exprime de manière particulièrement aigüe lorsque les volets sont en position fermée, et qu'il est alors nécessaire de raccorder les surfaces des volets avec les surfaces visibles de l'extérieur des parties fixes de la carrosserie qui entourent les volets, et dans lesquelles les volets sont intégrés. Ces parties fixes peuvent être formées par toute partie du véhicule jouxtant les dispositifs d'entrée d'air, comme la face avant ou la calandre, le parechoc, le capot, ou encore les ailes latérales.

Il convient donc que, en position fermée, la surface extérieure des volets soit affleurante aux interfaces, et en « continuité générale de forme », avec les surfaces extérieures de la partie fixe de la carrosserie entourant les volets, de manière à améliorer l'écoulement de l'air, et de réduire autant que faire se peut les effets néfastes sur l'aérodynamisme liés à la présence d'aspérités ou d'irrégularités de forme. Cette performance doit être assurée en particulier lorsque les volets sont fermés, et que le véhicule roule à grande vitesse. Comme on le verra par la suite cette dernière exigence n'est pas sans conséquence sur la résistance mécanique et l'étanchéité des volets.

De plus, cette continuité de forme contribue à procurer un effet de style soigné au véhicule. On entend ici par continuité générale de forme entre deux pièces distinctes formant la partie visible de la carrosserie, en l'espèce entre les volets, ou entre les volets et la surface de la carrosserie qui les entoure, le fait que toute droite passant par un premier point quelconque, visible de l'extérieur et situé sur la périphérie de la surface extérieure d'une pièce et par un second point le plus proche de ce premier point, visible également de l'extérieur et situé sur la périphérie de la surface extérieure de l'autre pièce, est sensiblement tangente à la surface extérieure de chacune des deux pièces.

L'invention a pour objet d'apporter une solution originale au problème posé ci-dessus.

Le document EP 2 457 761 décrit un dispositif selon le préambule de la revendication 1.

Le dispositif d'entrée d'air de refroidissement d'un véhicule automobile selon l'invention est formé d'un ou plusieurs volets, orientables chacun en rotation autour d'un axe par un mécanisme de commande, chaque volet comportant sur sa périphérie extérieure une surface d'appui destinée, lorsque le volet est en position fermée, à venir en contact avec une portée. Ce dispositif se caractérise en ce que la surface d'appui comporte un point de premier contact et un point de dernier contact avec ladite portée, ces points étant définis de sorte que, lorsque ledit mécanisme de commande actionne la fermeture des volets et que le point de premier contact entre en contact avec ladite portée, le point de dernier contact est éloigné de ladite portée d'une distance prédéfinie et non nulle.

La fermeture complète du volet s'opère alors en appliquant, par l'intermédiaire du mécanisme de commande, un couple de plaquage sur l'axe de rotation de manière à faire venir reposer l'ensemble des points de la surface d'appui sur la portée, jusqu'à ce que le point de dernier contact soit en contact avec ladite portée.

Ainsi, contrairement à ce que l'on pouvait penser, il s'avère préférable de conférer par construction au volet, une forme à l'état libre légèrement différente de celle de la forme du volet mis sous contrainte en position fermée, laquelle correspond à la forme voulue par le styliste chargé de la conception du véhicule. Cette « pré-déformation » volontaire du volet mobile permet de prédéfinir la localisation des points de premier et de dernier contact et d'assurer une fermeture parfaite du volet.

Il en résulte que, dès que le point de premier contact rencontre la portée, le mécanisme de commande génère un couple de fermeture, qui engendre une déformation progressive du volet jusqu'à ce que l'ensemble des points de la surface d'appui vienne en contact avec la portée, et jusqu'à ce que le point de dernier contact soit lui-même en contact avec la portée.

En effet, il a été mis en évidence que, lorsque le profil à l'état libre de la périphérie extérieure du volet correspond au profil exact de la portée, et en raison des dispersions de géométrie liées à la fabrication, à l'assemblage, aux jeux mécaniques ou encore à l'usure des pièces, la surface d'appui du volet ne coïncide pas de manière parfaitement complémentaire à la surface de la portée et laisse apparaitre, en position fermée, des bâillements non acceptables du point de vue de la qualité de l'affleurement des surfaces d'une part, et de l'étanchéité à l'air désirée d'autre part.

Le dispositif d'entrée d'air selon l'invention peut aussi comprendre isolément, ou en combinaison, les caractéristiques suivantes :
- le point de dernier contact d'un volet entre en contact avec ladite portée sous l'effet :
   ∘ d'un couple de plaquage engendré par le mécanisme de commande et,
   ∘ d'une déformation élastique du volet,
   de sorte que l'ensemble des points de la surface d'appui du volet mobile est en contact avec ladite portée.
- le couple de plaquage appliqué par le mécanisme de commande est au moins égal, et de préférence supérieur, à la somme d'un couple nécessaire pour assurer la déformation élastique du volet jusqu'à venir faire reposer le point de dernier contact sur la portée, et d'un couple nécessaire pour vaincre la pression aérodynamique exercée sur ledit volet lorsque le véhicule roule à grande vitesse.
- la valeur de la distance prédéfinie est comprise entre 2mm et 10mm, et préférentiellement comprise entre 3mm et 5mm.
- la distance entre l'axe de rotation et un bord du volet mobile est inférieure au quart de la plus grande largeur du volet mesurée dans une direction sensiblement perpendiculaire à l'axe de rotation.
- le point de premier contact est disposé au point de la surface d'appui situé à la plus grande distance de l'axe de rotation.
- la portée d'un volet mobile est disposée en tout ou partie sur une partie fixe de la carrosserie du véhicule entourant lesdits volets mobiles.
- la portée d'un volet mobile est formée en tout ou partie par la surface d'appui située sur un ou plusieurs volets adjacents.
- les axes des volets mobiles ne sont pas parallèles entre eux.
- des surfaces extérieures des volets mobiles sont des surfaces visibles de l'extérieur du véhicule.
- en position fermée, les surfaces extérieures des volets mobiles sont en continuité générale de forme avec les surfaces extérieures des volets adjacents et avec des surfaces de la carrosserie visibles de l'extérieur et entourant les dits volets mobiles.
- un joint d'étanchéité est disposé entre la surface d'appui des volets mobiles et la portée.

L'invention intéresse également la carrosserie d'un véhicule comportant un dispositif d'entrée d'air selon l'une quelconque des caractéristiques précédentes.

L'invention sera mieux comprise à la lecture des figures annexées, qui sont fournies à titre d'exemples et ne présentent aucun caractère limitatif, dans lesquelles :
- La figure 1 est une vue en perspective d'un volet selon l'invention.
- La figure 2 est une vue schématique en coupe selon le plan C1 du volet en position partiellement ouverte.
- La figure 3 est une vue schématique en coupe selon le plan C1 du volet lorsque le premier point de contact entre en contact avec la portée.
- La figure 4 est une vue schématique en coupe selon le plan C2, du volet lorsque le premier point de contact entre en contact avec la portée.
- La figure 5 est une vue schématique en coupe selon le plan C2, du volet lorsqu'un couple est appliqué sur l'axe de rotation par le mécanisme de commande et que le point de dernier contact entre en contact avec la portée.
- La figure 6 est une vue schématique en coupe d'un dispositif d'entrée d'air comprenant deux volets superposés en position fermée.
- La figure 7 est une vue générale en perspective de la partie avant d'un véhicule comprenant un dispositif d'entrée d'air selon l'invention.

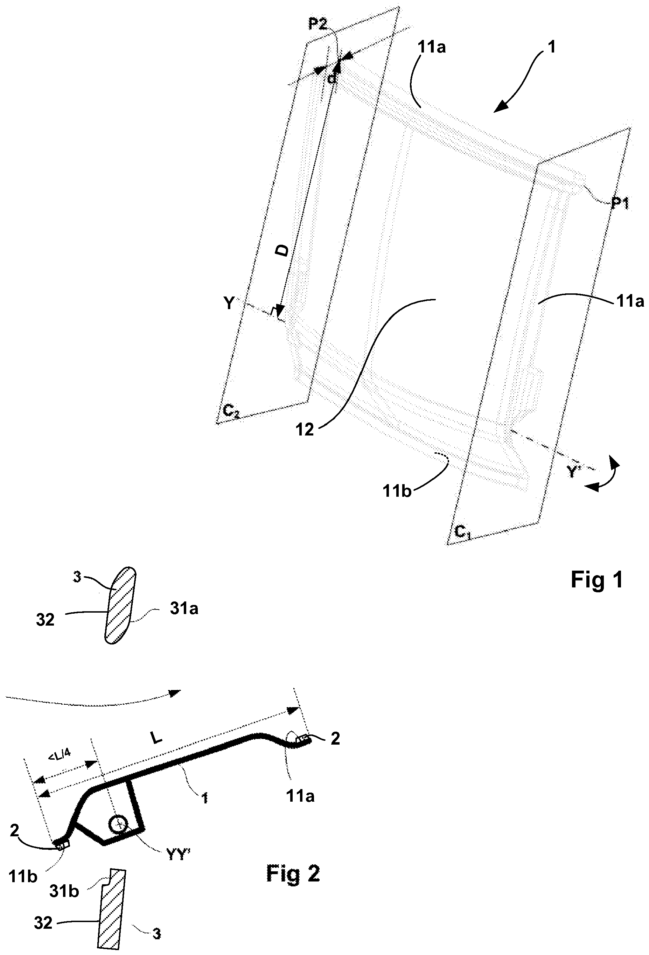

La figure 1 illustre de manière simplifiée un volet d'entrée d'air 1. Ce volet est mobile en rotation autour d'un axe YY' sous l'action d'un mécanisme de commande (non représenté).

En position fermée, la surface 12 du volet est orientée vers l'extérieur du véhicule et participe à la forme générale extérieure du véhicule.

Une surface d'appui 11 est disposée sur la périphérie du volet mobile. Selon sa disposition par rapport à l'axe de rotation YY', la surface d'appui 11 est placée sur la face du volet mobile orientée vers l'extérieur du véhicule (11a) ou sur la face du volet mobile orientée vers l'intérieur du véhicule (11b).

La figure 2 permet d'illustrer le volet mobile en position partiellement ouverte par rapport aux éléments de la carrosserie 3 considérés comme fixes et formant, par rapport aux volets les parties fixes de la carrosserie entourant le ou les volets.

Cette partie fixe comprend une portée 31, avec laquelle la surface d'appui 11 est destinée à venir en contact lorsque le volet mobile est en position fermée.

De manière inversée au volet mobile, la surface de la portée 31 est orientée vers la partie extérieure (31b) du véhicule, lorsque la surface d'appui (11b) est orientée vers l'intérieur du véhicule, et vers l'intérieur du véhicule (31a), lorsque la surface d'appui (11a) est orientée vers l'extérieur du véhicule.

La portée 31 sur laquelle la surface d'appui vient reposer lorsque le volet mobile est en position fermée peut se représenter sous la forme d'une ligne fermée dans l'espace à trois dimensions.

Lorsque le volet mobile est à l'état libre, c'est-à-dire lorsque la surface d'appui 11 du volet mobile 1 n'est pas en contact avec la portée 31, la surface d'appui 11 du volet mobile peut également se représenter sous la forme d'une ligne fermée dans l'espace à trois dimensions.

Lorsque le volet est à l'état libre, ces deux lignes ne se superposent pas exactement.

En effet, comme cela a été dit ci-dessus, on s'arrange, au moment de la conception et de la réalisation du volet mobile pour conférer un léger voile au volet mobile. Cette « pré déformation » contrôlée, est obtenue en faisant vriller la surface du volet autour d'un axe sensiblement perpendiculaire à l'axe de rotation YY'. En d'autres termes, la forme du volet à l'état libre correspond à celle qui serait obtenue sur un volet dont la forme de la surface d'appui correspondrait précisément à la forme de la portée, et sur l'axe de rotation duquel on appliquerait un couple, tout en maintenant le point de premier contact en position fixe.

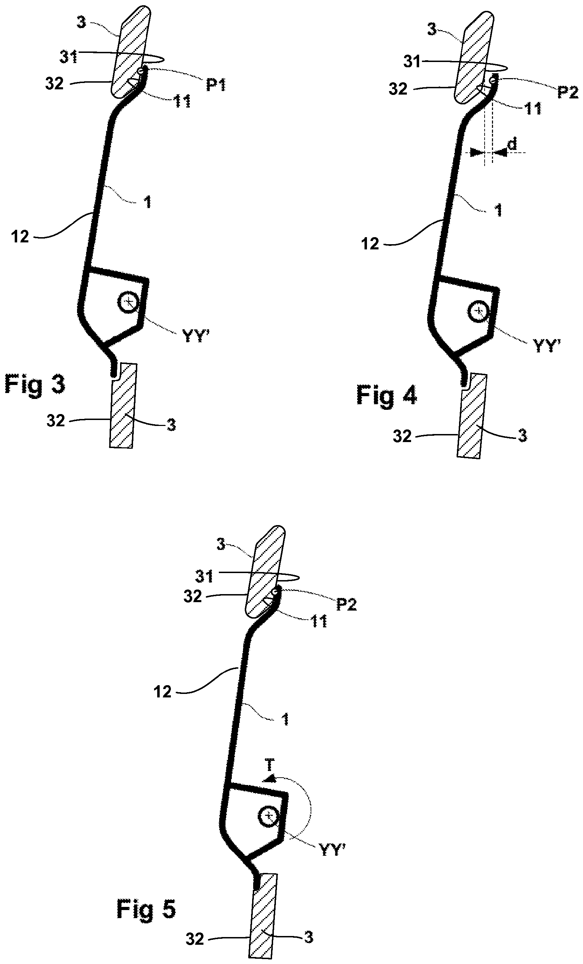

Au moment de la fermeture, et sous l'action du mécanisme de fermeture, comme cela est illustré à la figure 3, la surface d'appui 11 vient en contact avec la portée 31 par l'intermédiaire d'un point de premier contact P1.

Le mécanisme de fermeture applique alors un couple de plaquage T sur l'axe YY' de manière à forcer, sous l'effet de la déformation élastique du volet mobile, la mise en contact de l'ensemble des points de la surface d'appui 11 avec la portée 31, jusqu'à ce que le point P2, considéré ici comme le point de dernier contact, vienne reposer sur la portée 11. La fermeture complète du volet mobile est illustrée à la figure 5. Et les lignes fermées de la surface d'appui et de la portée ont des formes parfaitement complémentaires de sorte que la forme finale du volet en position fermée, correspond à la forme souhaitée par le styliste.

Lorsque le point de premier contact P1 vient reposer sur la portée 31, et en l'absence de l'application du couple de plaquage T, le point de dernier contact P2, supporté par la surface d'appui 11, est distant de la portée 31 d'une valeur d prédéfinie, comme cela est illustré à la figure 4.

Cette distance d peut être relativement faible, et s'apprécie en fonction de la taille des volets mobile. Elle peut être utilement comprise entre 2mm et 10mm, et préférentiellement comprise entre 3mm et 5mm.

Le couple de plaquage appliqué par le mécanisme de fermeture est déterminé par la rigidité du volet mobile. On veillera donc, au moment de la conception du volet mobile à ce que cet élément puisse se déformer sans qu'il soit nécessaire d'exercer des efforts trop importants, tout en restant vigilant à ce que le volet mobile soit suffisamment rigide pour pouvoir supporter la pression exercée par l'air lorsque le véhicule roule à grande vitesse.

Pour faciliter cette déformation élastique on cherchera donc à faire en sorte que le point de premier contact P1 soit disposé à une distance D de l'axe de rotation YY' la plus importante possible, comme cela est illustré à la figure 1. Cette optimisation permet également, lorsque le volet est en position ouverte, de réduire la partie du volet saillante vers l'extérieur de la carrosserie.

Pour augmenter cette distance D, on pourra également chercher à placer l'axe de rotation YY' le plus près possible d'un des bords de la périphérie du volet mobile, en le situant de préférence à moins du quart de la plus grande largeur du volet mesurée dans une direction sensiblement perpendiculaire à l'axe de rotation, comme cela est représenté à la figure 2.

Toutefois, en réalisant cette optimisation, on veillera à ce que le couple induit par la pression aérodynamique appliquée sur la surface du volet mobile en position fermée lorsque le véhicule roule à grande vitesse, et qui s'oppose au couple de plaquage, reste inférieur voire très inférieur au dit couple de plaquage exercé sur le volet mobile par le mécanisme de fermeture, de sorte que, dans cette configuration, et dans ces conditions de roulage, le point de dernier contact P2, qui est aussi le point le moins contraint en appui sur la portée, reste toujours en contact avec la portée 31.

Aussi, le couple de plaquage appliqué par le mécanisme de fermeture est au moins égal, et de préférence supérieur, à la somme du couple nécessaire pour assurer la déformation élastique du volet jusqu'à venir faire reposer le point de dernier contact P2 sur la portée 31 lors de la fermeture du volet et lorsque le véhicule est à l'arrêt, et du couple nécessaire pour vaincre la pression aérodynamique exercée sur les volets lorsque le véhicule roule à grande vitesse.

Le principe de conception des volets mobiles tels que décrit ci-dessus, permet de mettre sous contrôle le plaquage de la surface d'appui 11 sur la portée 31, et d'améliorer tout à la fois la continuité générale de forme entre la partie visible des volets 12 et les éléments fixes de la carrosserie 32, également visibles de l'extérieur, tout en assurant une meilleure étanchéité à la pénétration de l'air lorsque le volet est en position fermée.

Pour améliorer cette étanchéité, il est possible de disposer un joint souple 2 entre la portée 31 et la surface d'appui 11, comme cela est illustré à la figure 2. Le joint peut être fixé, par exemple par simple collage sur la portée 31 ou encore sur la surface d'appui 11. Toutefois, pour des raisons d'esthétique, on peut choisir de disposer simultanément le joint sur les parties de la surface d'appui 11 et de la portée 31 qui ne sont pas visibles de l'extérieur lorsque le volet est en position ouverte.

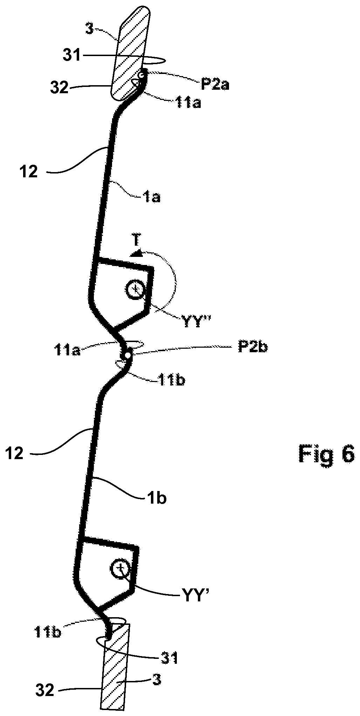

La figure 6 illustre le cas dans lequel le mécanisme d'entrée d'air comprend une pluralité de volets juxtaposés les uns aux autres.

Cette configuration peut être recherchée pour des effets de style ou encore, lorsque l'entrée d'air est de section importante, pour répartir sur plusieurs volets la pression aérodynamique exercée sur ces derniers.

Chacun des volets est articulé autour de son axe YY'.

On remarquera que, dans cette configuration, les axes YY' ne sont pas nécessairement parallèles entre eux. L'angle formé par les axes de rotation de deux volets mobiles peut atteindre 10°.

Dans l'exemple illustré à la figure 6, le dispositif d'entrée d'air comprend deux volets 1a et 1b.

En position fermée, le point de dernier contact P2a du volet 1a de la surface d'appui 11a vient reposer sur la portée 31 de la partie fixe 3. Et le point de dernier contact P2b de la surface d'appui 11 b du volet 1b vient reposer sur la surface d'appui 11a du volet 1a faisant office de portée.

Lorsque le dispositif d'entrée d'air comprend plusieurs volets, la portée des volets se situe donc en partie sur la surface d'appui d'un volet adjacent.

On observera que le couple de plaquage appliqué sur le volet 1b a pour effet de s'opposer au couple de plaquage du volet 1a, et de s'additionner au couple engendré par la pression aérodynamique exercée sur le volet 1a.

Aussi, on veillera à disposer de manière appropriée les positions respectives des axes de rotation de chacun des volets, et à déterminer la valeur des couples de plaquage pour s'assurer de la bonne fermeture des volets lorsque le véhicule roule à grande vitesse.

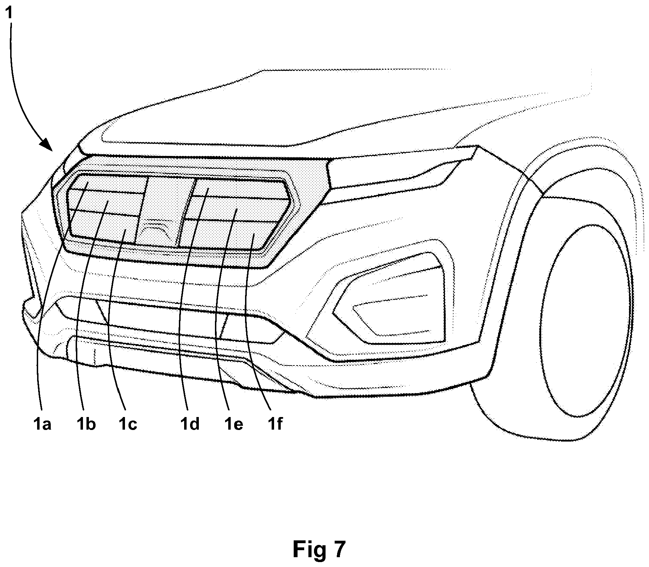

La figure 7 illustre la partie avant de la carrosserie d'un véhicule automobile dont la calandre est équipée d'un dispositif d'entrée d'air selon l'invention. Les volets 1a, 1b, 1c, 1d, 1e et 1f sont en position fermée, et sont en continuité générale de forme entre eux et avec les parties fixes de la calandre.

### NOMENCLATURE

1 Volet d'entrée d'air mobile.
1a Premier volet mobile.
1b Second volet mobile.
1c, 1d, 1e, 1f Volets mobiles.
11 Surface d'appui du volet mobile.
11a Surface d'appui du volet mobile orientée vers l'extérieur du véhicule.
11b Surface d'appui du volet mobile orientée vers l'intérieur du véhicule.
12 Surface extérieure du volet mobile.
2 Joint d'étanchéité.
3 Partie fixe du véhicule.
31 Portée sur laquelle, position fermée, vient reposer la surface d'appui.
31a Portée orientée vers l'intérieur du véhicule.
31b Portée orientée vers l'extérieur du véhicule.
32 Surface extérieure de la partie fixe formant la carrosserie visible de l'extérieur du véhicule.
P1 Point de premier contact entre la surface d'appui et la portée.
P2 Point de dernier contact entre la surface d'appui et la portée.
P2a Point de dernier contact du premier volet mobile.
P2b Point de dernier contact du second volet mobile.
T Couple de placage exercée par le mécanisme de fermeture sur l'axe YY'.
YY' Axe de rotation des volets mobiles.
d Distance prédéfinie entre le point de second contact et la portée lorsque le point de premier contact vient s'assoir sur ladite portée.
D Distance entre le point de premier contact et l'axe de rotation du volet mobile.

## Revendications

1. Dispositif d'entrée d'air de refroidissement à l'intérieur d'un véhicule automobile formé d'un ou plusieurs volets mobiles (1), orientables chacun en rotation autour d'un axe (YY') par un mécanisme de commande, chaque volet comportant sur sa périphérie extérieure une surface d'appui (11) destinée, lorsque le volet mobile est en position fermée, à venir en contact avec une portée (31), **caractérisé en ce que** la surface d'appui (11) comporte un point de premier contact (P1) et un point de dernier contact (P2) avec ladite portée (31), ces points étant définis de sorte que, lorsque ledit mécanisme de commande actionne la fermeture des volets mobiles (1) et que le point de premier contact (P1) entre en contact avec ladite portée (31), le point de dernier contact (P2) est éloigné de ladite portée (31) d'une distance prédéfinie (d) et non nulle.

2. Dispositif selon la revendication 1, dans lequel le point de dernier contact (P2) d'un volet (1) entre en contact avec ladite portée (31) sous l'effet :
- d'un couple de plaquage (T) engendré par le mécanisme de commande et,
- d'une déformation élastique du volet,
de sorte que l'ensemble des points de la surface d'appui (11) du volet mobile (1) est en contact avec ladite portée (31).

3. Dispositif selon la revendication 2, dans lequel le couple de plaquage (T) appliqué par le mécanisme de commande est au moins égal, et de préférence supérieur, à la somme d'un couple nécessaire pour assurer la déformation élastique du volet (1) jusqu'à venir faire reposer le point de dernier contact (P2) sur la portée (31), et d'un couple nécessaire pour vaincre une pression aérodynamique exercée sur ledit volet (1) lorsque le véhicule roule à grande vitesse.

4. Dispositif d'entrée d'air selon l'une des revendications 1 à 3, dans lequel la valeur de la distance prédéfinie (d) est comprise entre 2mm et 10mm, et préférentiellement comprise entre 3mm et 5mm.

5. Dispositif d'entrée d'air selon l'une des revendications 1 à 4, dans lequel la distance entre l'axe de rotation (YY') et un bord du volet mobile est inférieure au quart de la plus grande largeur (L) du volet mesurée dans une direction sensiblement perpendiculaire à l'axe de rotation (YY').

6. Dispositif d'entrée d'air selon l'une des revendications 1 à 5, dans lequel le point de premier contact est disposé au point de la surface d'appui situé à la plus grande distance (D) de l'axe de rotation.

7. Dispositif selon l'une des revendications 1 à 6, dans lequel la portée (31) d'un volet mobile est disposée en tout ou partie sur une partie fixe (3) de la carrosserie du véhicule entourant lesdits volets mobiles (1).

8. Dispositif d'entrée d'air selon l'une des revendications 1 à 7, dans lequel la portée d'un volet mobile est formée en tout ou partie par une surface d'appui (11) située sur un ou plusieurs volets adjacents.

9. Dispositif d'entrée d'air selon la revendication 8, dans lequel les axes (YY') des volets mobiles ne sont pas parallèles entre eux.

10. Dispositif d'entrée d'air selon l'une des revendications 1 à 9, dans lequel des surfaces extérieures (12) des volets mobiles (1) sont des surfaces visibles de l'extérieur du véhicule.

11. Dispositif d'entrée d'air selon la revendication 10, dans lequel, en position fermée, les surfaces extérieures (12) des volets mobiles (1) sont en continuité générale de forme avec les surfaces extérieures des volets adjacents, et avec des surfaces de la carrosserie visibles de l'extérieur (32) et entourant les dits volets mobiles (1).

12. Dispositif d'entrée d'air, selon l'une des revendications 1 à 11, dans lequel un joint d'étanchéité (2) est disposé entre la surface d'appui (11) des volets mobiles(1) et la portée (31).

13. Carrosserie de véhicule comportant un dispositif d'entrée d'air selon l'une quelconque des revendications 1 à 12.

## Patentansprüche

1. Vorrichtung für den Einlass von Kühlungsluft in das Innere eines Kraftfahrzeugs, die von einer oder mehreren beweglichen Klappen (1) gebildet ist, die jede durch einen Betätigungsmechanismus um eine Achse (YY') drehbar sind, wobei jede Klappe auf ihrem äußeren Umfang eine Abstützfläche (11) aufweist, die dazu bestimmt ist, wenn die bewegliche Klappe in geschlossener Stellung ist, mit einer Auflagefläche (31) in Kontakt zu kommen, **dadurch gekennzeichnet, dass** die Abstützfläche (11) einen Punkt (P1) für einen ersten Kontakt und einen Punkt (P2) für einen letzten Kontakt mit der Auflagefläche (31) aufweist, wobei diese Punkte so festgelegt sind, dass, wenn der Betätigungsmechanismus das Schließen der beweglichen Klappen (1) betätigt und wenn der Punkt (P1) für den ersten Kontakt in Kontakt mit der Auflagefläche (31) kommt, der Punkt (P2) für den letzten Kontakt von der Auflagefläche (31) um einen vorab festgelegten Abstand (d) ungleich null entfernt ist.

2. Vorrichtung nach Anspruch 1, wobei der Punkt (P2) für den letzten Kontakt einer Klappe (1) mit der Auflagefläche (31) in Kontakt kommt unter der Einwirkung:
- eines Andrückmoments (T), das durch den Betätigungsmechanismus erzeugt wird, und
- einer elastischen Verformung der Klappe,
in der Form, dass sämtliche Punkte der Abstützfläche (11) der beweglichen Klappe (1) mit der Auflagefläche (31) in Kontakt sind.

3. Vorrichtung nach Anspruch 2, wobei das vom Betätigungsmechanismus angewendete Andrückmoment (T) mindestens gleich, und vorzugsweise größer, ist als die Summe aus einem Moment, das notwendig ist, um die elastische Verformung der Klappe (1) zu bewirken, bis sie den Punkt (P2) für den letzten Kontakt auf der Auflagefläche (31) aufliegen lässt, und einem Moment, das notwendig ist, um einen aerodynamischen Druck, der auf die Klappe (1) ausgeübt wird, zu überwinden, wenn das Fahrzeug mit großer Geschwindigkeit fährt.

4. Lufteinlassvorrichtung nach einem der Ansprüche 1 bis 3, wobei der Wert des vorab festgelegten Abstands (d) zwischen 2 mm und 10 mm beträgt und vorzugsweise zwischen 3 mm und 5 mm beträgt.

5. Lufteinlassvorrichtung nach einem der Ansprüche 1 bis 4, wobei der Abstand zwischen der Drehachse (YY') und einem Rand der beweglichen Klappe kleiner ist als ein Viertel der größten Breite (L) der Klappe, gemessen in einer Richtung, die zu der Drehachse (YY') im Wesentlichen senkrecht ist.

6. Lufteinlassvorrichtung nach einem der Ansprüche 1 bis 5, wobei der Punkt für den ersten Kontakt an einem Punkt der Abstützfläche angeordnet ist, der sich im größten Abstand (D) zu der Drehachse befindet.

7. Vorrichtung nach einem der Ansprüche 1 bis 6, wobei die Auflagefläche (31) einer beweglichen Klappe ganz oder teilweise auf einem feststehenden Teil (3) der Karosserie des Fahrzeugs angeordnet ist, das die beweglichen Klappen (1) umgibt.

8. Lufteinlassvorrichtung nach einem der Ansprüche 1 bis 7, wobei die Auflagefläche einer beweglichen Klappe ganz oder teilweise von einer Abstützfläche (11) gebildet ist, die sich an einer oder mehreren angrenzenden Klappen befindet.

9. Lufteinlassvorrichtung nach Anspruch 8, wobei die Achsen (YY') der beweglichen Klappen zueinander nicht parallel sind.

10. Lufteinlassvorrichtung nach einem der Ansprüche 1 bis 9, wobei äußere Flächen (12) der beweglichen Klappen (1) Flächen sind, die von außerhalb des Fahrzeugs sichtbar sind.

11. Lufteinlassvorrichtung nach Anspruch 10, wobei die äußeren Flächen (12) der beweglichen Klappen (1), in geschlossener Stellung, in allgemeiner Formkontinuität sind mit den äußeren Flächen der angrenzenden Klappen, und mit Flächen, die von außerhalb (32) des Fahrzeugs sichtbar sind und die beweglichen Klappen (1) umgeben.

12. Lufteinlassvorrichtung nach einem der Ansprüche 1 bis 11, wobei ein Dichtungselement (2) zwischen der Abstützfläche (11) der beweglichen Klappen (1) und der Auflagefläche (31) angeordnet ist.

13. Fahrzeugkarosserie mit einer Lufteinlassvorrichtung nach einem der Ansprüche 1 bis 12.

## Claims

1. Device for admitting cooling air to a motor vehicle interior, formed of one or several mobile flaps (1), each orientable in rotation about an axis (YY') by a control mechanism, each flap comprising on its external periphery a pressing surface (11) intended, when the mobile flap is in the closed position, to come into contact with a bearing surface (31), **characterised in that** the pressing surface (11) comprises a point of first contact (P1) and a point of last contact (P2) with the said bearing surface (31), these points being defined in such a way that when the control mechanism actuates closure of the mobile flaps (1) and the point of first contact (P1) comes into contact with the said bearing surface (31), the point of last contact (P2) is distant from the said bearing surface (31) by a predefined and non-zero distance (d).

2. Device according to claim 1, wherein the point of last contact (P2) of a flap (1) comes into contact with the said bearing surface (31) under the effect of:
- a pressing torque (T) generated by the control mechanism, and
- an elastic deformation of the flap,
so that all the points of the pressing surface (11) of the mobile flap (1) come into contact with the said bearing surface (31).

3. Device according to claim 2, wherein the pressing torque (T) applied by the control mechanism is at least equal to, and preferably greater than, the sum of a torque required to create the elastic deformation of the flap (1) until the point of last contact (P2) rests against the bearing surface (31), and a torque required to overcome an aerodynamic pressure exerted on the said flap (1) when the vehicle is driving at high speed.

4. Air inlet device according to one of claims 1 to 3, wherein the value of the predefined distance (d) is between 2 mm and 10 mm and preferably between 3 mm and 5 mm.

5. Air inlet device according to one of claims 1 to 4, wherein the distance between the axis of rotation (YY') and an edge of the mobile flap is less than a quarter of the largest width (L) of the flap measured in a direction substantially perpendicular to the axis of rotation (YY').

6. Air inlet device according to one of claims 1 to 5, wherein the point of first contact is arranged at the point of the pressing surface located at a distance (D) as far away as possible from the axis of rotation.

7. Device according to one of claims 1 to 6, wherein the bearing surface (31) of a mobile flap is arranged wholly or partially on a fixed part (3) of the vehicle bodywork surrounding the said mobile flaps (1).

8. Air inlet device according to one of claims 1 to 7, wherein the bearing surface of a mobile flap is formed wholly or partially by a pressing surface (11) located on one or more adjacent flaps.

9. Air inlet device according to claim 8, wherein the axes (YY') of the mobile flaps are not parallel to each other.

10. Air inlet device according to one of claims 1 to 9, wherein outer surfaces (12) of the mobile flaps (1) are surfaces visible from outside the vehicle.

11. Air inlet device according to claim 10, wherein, in the closed position, the outer surfaces (12) of the mobile flaps (1) are in general continuity of shape with the outer surfaces of the adjacent flaps and with bodywork surfaces visible from the outside (32) and surrounding the said mobile flaps (1).

12. Air inlet device according to one of claims 1 to 11, wherein a seal (2) is arranged between the pressing surface (11) of the mobile flaps (1) and the bearing surface (31).

13. Vehicle bodywork comprising an air inlet device according to any one of claims 1 to 12.
